# EUROPÄISCHE PATENTSCHRIFT

(11) **EP 0 781 182 B1**
(45) Veröffentlichungstag und Bekanntmachung des Hinweises auf die Patenterteilung: **29.03.2000**
(21) Anmeldenummer: 95930389.2
(22) Anmeldetag: 11.09.1995
(51) Int. Cl.: B23B 27/14

(54) **SCHNEIDEINSATZ**
CUTTING INSERT
PLAQUETTE DE COUPE

(30) Priorität: 13.09.1994 DE 4434297; 21.10.1994 DE 4437689
(43) Veröffentlichungstag der Anmeldung: 02.07.1997
(73) Patentinhaber: Widia GmbH, 45145 Essen (DE)
(72) Erfinder: Hintze, Wolfgang, 45136 Essen (DE); Knickenberg, Bernd, 45355 Essen (DE)
(74) Vertreter: Vomberg, Friedhelm, Dipl.-Phys.
(86) Internationale Anmeldenummer: DE9501243
(87) Internationale Veröffentlichungsnummer: WO9608331

(56) Entgegenhaltungen:
- EP-A- 0 313 534
- EP-A- 0 596 844
- FR-A- 2 223 122

## Beschreibung

Die Erfindung betrifft einen Schneideinsatz mit einer im wesentlichen rhombischen, dreieckigen oder trigonförmigen Grundform.

Beim Form- und Schlichtdrehen wird die Werkstückkontur aus Gründen minimaler Bearbeitungszeit, der Einhaltung geringer Lagetoleranzen sowie einfacher Programmierung vielfach in einem Schnitt gefertigt. Hierbei ergeben sich beim Auswärtskopieren von Planschultern Probleme bezüglich der Spankontrolle, die insbesondere in einer automatisierten Fertigung zu Störungen führen können.

In der DE 25 50 333 C3, die den nächstliegenden Stand der Technik darstellt, wird ein Schneideinsatz zum Kopierdrehen beschrieben, der einen an die Hauptschneide anschließenden zusätzlichen Schneidenteil besitzt, der im wesentlichen senkrecht zur Hauptschneide steht und sich von der Hauptschneide in den Schneideinsatz hinein erstreckt. Dieser Schneidenteil kann in Form eines konvexen Kreisbogens in die Hauptschneide übergehen. Nachteiligerweise ist die Schneide im Bereich der spitzen Schneidecke sowohl beim Längs-, beim Einwärtskopier- als auch beim Planschulterdrehen im Eingriff mit dem Werkstück, wobei die beim Zerspanen auftretenden Unterschiede in der Spanungsdicke bezüglich einer gewünschten Spankontrolle und Schneidenstabilität nicht oder nur sehr schlecht beherrschbar sind.

Die EP 0 133 168 B1 beschreibt einen Schneideinsatz für Längsdreh-, Einwärtsdreh- und Querdrehtätigkeiten, der jeweils Schneidecken aufweist, die unter einem Schneideckenwinkel ≤90° zusammenlaufen, die beim Längsdreh- und Einwärtsdrehen am Werkstück spanend anliegen. Entlang der jeweiligen Schneidkanten ist zusätzlich ein herausragender Schneidenteil vorgesehen, der als Querschneider zum Abtragen von groben und kurzen Spänen während des Querdrehens dienen soll, wobei das herausragende Teil der spitzen Schneidecke vorangeht, die gleichzeitig am Werkstück Schlichtspäne schneiden soll. Das herausragende Teil der Schneidkante kann konvex gekrümmt sein und zwischen zwei Schneidecken oder an eine stumpfe Schneidecke angrenzend liegen. Der Nachteil dieser Schneideinsätze liegt darin, daß sie nicht in genormte Halter (nach DIN/ISO-Norm) spannbar sind. Ferner ist die an die spitze Schneidecke angrenzende Hauptschneide sowohl beim Längs-, beim Einwärtskopier- als auch beim Planschulterdrehen im Eingriff, wobei die dabei auftretenden Unterschiede in der Spanungsdicke nicht oder nur schlecht bezüglich der Spankontrolle und der Schneidenstabilität beherrschbar sind. Beim gleichzeitige Schruppen und Schlichten der Planschulter ergeben sich hohe Zerspanungskräfte, die zudem noch erheblich schwanken, so daß die gedrehte Werkstückoberfläche nicht hinreichend maßhaltig und/oder eben bearbeitet werden kann. Bei den auftretenden hohen Kräften besteht schließlich die Gefahr der Schneideinsatzüberlastung, die unter Umständen zum Schneideinsatzbruch führen kann.

Die JP-A-52-101786 beschreibt einen in der Grundform dreieckigen oder viereckigen Schneideinsatz, dessen Schneidkanten jeweils nur an einem einer Schneidecke angrenzenden Bereich auf einer Seite vorspringende nasenförmige Schneidkantenbereiche aufweisen, deren gemeinsame Einhüllende auf einem zur Grundform kongruenten, aber flächenmäßig größeren Dreieck oder Viereck liegt. Im Bereich der nasenförmigen Vorsprünge sind entlang der Schneidkante Auskehlungen angeordnet. Dieser Schneideinsatz kann jedoch kunstruktionsbedingt nur für Zerspanungsarbeiten in einer Vorschubrichtung, d.h., nur für Links- oder Rechts-Drehoperationen verwendet werden, da pro Schneidecke nur eine der angrenzenden Schneidkanten einsetzbar ist. Darüber hinaus stören die vorspringenden Bereiche beim Einspannen des Schneideinsatzes in den Halter.

Die EP 0 162 029 B1 beschreibt einen Schneideinsatz für das Längsdrehen, Einwärts-Nachformdrehen, Schleifreliefdrehen und Auswärts-Nachformdrehen, dessen Schneidecken in der Breite verlängert sind und aus einer Anzahl gekrümmter Segmente bestehen, die im wesentlichen spiegelsymmetrisch zur Schneideckenwinkelhalbierenden liegen. Die von der Mitte des Schneideinsatzes am weitesten außen angeordnete Krümmung der Schneide besteht aus einem Kreissegment mit einem Radius, der kleiner als der Radius der angrenzenden Schneidkantensegmente ist. Auch dieser Schneideinsatz ist wegen der nach außen hervortretenden Schneidecken nicht in genormte Schneideinsatzhalter spannbar. Die Schneidecke ist sowohl beim Längs-, beim Einwärtskopierals auch beim Planschulterdrehen im Eingriff, woraus sich ebenso wie bei den vorbeschriebenen Schneideinsätzen Unterschiede in der Spanungsdicke ergeben, die eine hinreichende Spankontrolle und Schneidenstabilität verhindern.

In der EO 0 596 844 A1 wird ein Schneideinsatz mit einer im wesentlichen dreieckigen Grundform für Abstecharbeiten beschrieben, dessen Schneidecken einen abgeschrägten, gegenüber einer Grundformeinhüllenden zurückgesetzten Schneidenteil aufweisen, der im wesentlichen senkrecht zur Abstechrichtung angeordnet ist und dessen hieran angrenzenden Schneidenteilstücke in Abstechrichtung konvergieren sollen. Jeder abgeschrägte Schneidenteil ragt entweder über die dreieckige Grundformeinhüllende mit einem seiner Enden hinaus oder grenzt hieran an. Im Anschluß das über die Grundformeinhüllende hinausragende oder hieran angrenzende Ende schließt sich eine Schneideneinsenkung an. Der in der EP 0 596 844 A1 beschriebene Schneideinsatz ist jedoch nur für Abstecharbeiten und nicht für Formdreharbeiten unter unterschiedlichen Eingriffsbedingungen geeignet.

Es ist Aufgabe der vorliegenden Erfindung, einen Schneideinsatz zur spanenden Bearbeitung zu schaffen, der sich zum Formdrehen unter unterschiedlichen Eingriffsbedingungen eignet, d.h., der beim Auswärtskopieren von Planschultern eine prozeßsichere Kurzspanbildung gewährleistet, der ferner eine hohe geometrische Schneidenstabilität aufweist, um auch mit hohen Vorschüben Ein- und/oder Auswärtskopieren und Längsdrehen zu können, der bezüglich der zu fertigenden Werkstückkonturen eine optimale Qualität der Oberflächengüte des Werkstückes sowie eine hohe Standzeit bei geringem Freiflächenverschleiß ermöglicht und der in genormte (nach DIN/ISO-Norm gefertigte) Halter spannbar ist und unter den beim Zerspanen entstehenden unterschiedlichen Belastungsrichtungen eine sichere Positionierung gewährleistet.

Diese Aufgabe wird durch den Schneideinsatz nach Anspruch 1 gelöst, der neuerungsgemäß dadurch gekennzeichnet ist, daß die spitze Schneidecke(n) gegenüber der Grundformeinhüllenden zurückgesetzt ist und am schneideckenabgewandten Ende in eine Schneidenausstülpung übergeht, deren äußerster Punkt auf der durch die Grundform vorgegebenen Einhüllenden liegt und woran sich im weiteren Schneidenverlauf auf der schneideckenabgewandten Seite mindestens eine Schneideneinsenkung anschließt, wobei die gemeinsame Tangente an die Schneidenausstülpung und einen Punkt der zurückgesetzten Schneidecke oder des zurückgesetzten Teiles der Hauptschneide mit der Grundformeinhüllenden einen spitzen Winkel ≤20° bildet.

Durch diese Ausgestaltung werden zum Ein-/Auswärts- und Längsdrehen einerseits und zum Auswärtskopieren von Planschultern andererseits unterschiedliche Schneidenabschnitte geschaffen, die getrennt (und im Unterschied zu den nach dem Stand der Technik bekannten Lösungen niemals gemeinsam) zum Zerspanungseinsatz kommen. Im Unterschied zu der nach der EP 0 133 168 B1 und der EP 0 162 029 B1 besitzt der Schneideinsatz nach der vorliegenden Erfindung keine Schneidkantenabschnitte, die über die genormte rhombische, dreieckige oder trigonförmige Grundform hervorstehen, so daß ein Einspannen bzw. Einklemmen in die entsprechenden nach dem Stand der Technik genormten Schneideinsatzhalter möglich ist. Insbesondere besitzt der erfindungsgemäße Schneideinsatz eine oder mehrere zurückgesetzte spitze Schneidecken oder eine an die spitze Schneidecke angrenzende zurückgesetzte Hauptschneide, die beim Ein- oder Auswärts- und Längsdrehen zum Zerspanungseinsatz kommt. Durch die sich an die Schneidenausstülpung auf der schneideckenabgewandten Seite anschließende Schneideneinsenkung ist ein Schneidenbereich geschaffen, der ausschließlich zum Auswärtskopieren von Planschultern dient. Als einhüllende Grundform sind rhombische, dreieckige oder trigonförmige Schneideinsätze, insbesondere der Formen D und T möglich.

Weiterbildungen der Erfindung sind in den Unteransprüchen 2 bis 10 beschrieben.

Vorzugsweise ist der Schneideinsatz derart gestaltet, daß die gemeinsame Tangente an die Schneidenausstülpung und einen Punkt der zurückgesetzten Schneidecke oder des zurückgesetzten Teiles der Hauptschneide mit der Grundformeinhüllenden einen spitzen Winkel ≤10° bildet. Dieser Winkel, der in speziellen Ausführungen beispielsweise 3° betragen kann, erlaubt es, die spitze, zurückgesetzte Schneidecke so zu gestalten, daß der Schneideckenwinkel entsprechend der einhüllenden Grundform erhalten bleibt.

Außerdem ist bei Klemmung des Schneideinsatzes in einem Halter, dessen Einstellwinkel sich aus 90° plus spitzer Winkel ergibt, sichergestellt, daß eine (rechtwinklige) Planschulter gefertigt werden kann.

Nach einer weiteren Ausgestaltung der Erfindung legt der Abstand der Tangentenberührungspunkte die maximale Hauptschneidenlänge zum Ein- oder Auswärtskopieren und Längsdrehen fest, die vorzugsweise größer als der Schneideckenradius ist. Diese Festlegung ist nur scheinbar einschränkend, da beim Schlichten bzw. bei der Bearbeitung von Near-Net-Shape-Werkstücken nur ein begrenztes Aufmaß vorliegt, worauf die Schneidenlänge abgestimmt wird.

In einer besonderen Ausführungsform des Schneideinsatzes ist die Hauptschneidenlänge zum Ein- oder Auswärtskopieren und Längsdrehen zwischen 0,6 mm bis 6 mm oder auf eine Länge festgelegt, die etwa 1,5 bis 8mal, vorzugsweise 2,5 bis 5mal so groß wie der Schneideckenradius der angrenzenden spitzen Schneidecke ist.

Nach einer weiteren Ausgestaltung der Erfindung besitzt die Schneide im Bereich der Schneidenausstülpung eine konvexe Gestaltung mit einem Schneidenradius, der vorzugsweise etwa der Schneideckenradius der angrenzenden spitzen Schneidecke ist.

Der Schneidenabschnitt zwischen der spitzen Schneidecke und der Schneidenausstülpung ist zumindest teilweise konkav geformt, vorzugsweise besteht er aus konkaven und geradlinigen Abschnitten. Insbesondere ist dieser Schneidenabschnitt stetig ausgebildet, d.h. ohne Ecken und Kanten. Der sich an die Schneideckenausstülpung auf der der spitzen Schneidecke abgewandten Seite anschließende Teil der Schneideneinsenkung verläuft vorzugsweise unter einem Winkel bzw. einem an die dortige konkave Schneide angelagerten Tangentialwinkel von 5° bis 35°, vorzugsweise 15° bis 25°, der zwischen der Grundformeinhüllenden und der genannten Tangente an die Schneide gemessen wird. Die Tiefe der Schneideneinsenkung liegt zwischen 0,2 mm bis 6 mm, vorzugsweise 0,3 mm bis 1,5 mm.

Nach einer weiteren Ausgestaltung der Erfindung ist die Tiefe der Schneideneinsenkung (bezogen auf die Grundformeinhüllende) kleiner als der Überstand der Schneidkörperunterkante gegenüber der Auflageflächenkante des Schneideinsatzhalters. Diese Maßnahme dient einer sicheren Klemmung des Schneideinsatzes im Klemmhalter und schützt letzteren vor eventueller Beschädigung durch Späne. Die Länge der Schneideneinbuchtung liegt nach einer speziellen Ausführungsform der Erfindung zwischen 2 mm bis 10 mm, vorzugsweise zwischen 3 mm und 6 mm. Die Schneide ist am Endpunkt der Schneideneinsenkung gegenüber der Schneidenausbuchtung abgesenkt, vorzugsweise um 0,3 mm bis 2 mm, weiterhin vorzugsweise um 0,4 mm bis 1 mm. Bevorzugt ist der Schneideckenwinkel der spitzen Schneidecke gleich dem Schneideckenwinkel der Grundformeinhüllenden. Hierdurch können Schnittbedingungen erfüllt werden, die gleich den nach dem Stand der Technik bekannten Schneideinsätzen sind, welche die Form der Grundformeinhüllenden haben.

Um tiefere Schnitte beim Auswärtskopieren von Planschultern schneiden zu können, ist nach einer Weiterbildung der Erfindung vorgesehen, daß sich an die Schneideneinsenkung im weiteren Verlauf eine oder mehrere weitere Schneideneinsenkungen anschließen, deren jeweilige Endpunkte auf der Grundformeinhüllenden liegen. Insbesondere sind die an die Schneideneinsenkung oder die jeweiligen an die Endpunkte der Schneideneinsenkungen anschließenden Schneidenabschnitte geradlinig und deckungsgleich mit der Grundformeinhüllenden ausgebildet, womit eine sichere stabile Klemmung in entsprechend der grundeinhüllenden Form ausgebildeten Haltern gewährleistet wird. Die genannten geradlinigen Schneidenabschnitte zwischen Schneideneinbuchtungen besitzen nach einer weiteren Ausgestaltung der Erfindung eine Länge zwischen 0,1 mm bis 1 mm, vorzugsweise 0,1 mm bis 0,5 mm.

Schließlich sind die zum Ein- oder Auswärtskopieren oder Längsdrehen gestalteten zurückgesetzten Schneidecken oder der zurückgesetzte Teil einer an eine spitze Schneidecke angrenzenden Hauptschneide gegenüber der zum Auswärtskopieren von Planschultern ausgebildeten Schneideckeneinsenkung bzw. mehreren Schneideneinsenkungen so ausgebildet, daß die jeweils beim Werkstückspanen im Eingriff befindlichen bzw. wirksamen Spanformgeometrien unterschiedlich sind, insbesondere die beim Ein- oder Auswärtskopieren oder Längsdrehen entstehenden Späne eine größere Spandicke haben als die beim Auswärtskopieren von Planschultern entstehenden Späne.

Nach einer weiteren Ausgestaltung der Erfindung weist die Grundform die Toleranz M (nach DIN/ISO-Norm) auf und/oder die spitze Schneidecke bzw. die spitzen Schneidecken ein Maß m, das die genormte Toleranz M um einen Betrag von maximal 1,5 mm, vorzugsweise 0,3 mm, unterschreitet.

Die Grundformeinhüllende kann im Innenkreisradius um einen Betrag von maximal 3 mm, vorzugsweise maximal 0,5 mm, von genormten Innenkreisradien nach DIN 4987/ISO 1832 zu ähnlichen, größeren oder kleineren Schneideinsätzen abweichen. Vorzugsweise kann die Grundformeinhüllende im Innenkreisradius größer als das durch die Toleranz M bestimmte Maß sein und/oder das Maß m der spitzen Schneidecke bzw. der spitzen Schneidecken innerhalb des Toleranzmaßes M nach DIN 4987/ISO 1832 liegen.

Um eine exakte lagebestimmte Klemmung des Schneideinsatzes in genormten Haltern zu ermöglichen, ist nach einer Weiterbildung der Erfindung vorgesehen, daß die Schneideinsatzbohrung oder Klemmbohrung in einer Draufsicht betrachtet eine Langloch- oder kantenfreie Kleeblattform aufweist, wobei die gegenüber der Grundkreisform abweichenden Kreisabschnitte der Langloch- oder Kleeblattformerweiterungen eine Kreismittelpunktsverschiebung aufweisen, die vorzugsweise dem Quotienten aus der Innenkreisradiusdifferenz und dem Sinus des halben spitzen Schneideckenwinkels entspricht und in Richtung der spitzen Schneidecke verschoben ist. Alternativ hierzu kann eine vergrößerte kreisförmige Schneideinsatzbohrung vorgesehen sein, die den der Langloch- oder Kleeblattform umschreibenden Kreisradius besitzt.

Nach einer weiteren Ausgestaltung der Erfindung wird der Schneideinsatz zum Einspannen in einen Schneideinsatzhalter unter Einstellwinkeln ≥90° verwendet, vorzugsweise unter Einstellwinkel von 95°, 93°, 91° oder 107,5°. Bei Klemmung des Schneideinsatzes in einem Halter, dessen Einstellwinkel sich aus 90° plus spitzer Winkel ergibt, ist sichergestellt, daß eine (rechtwinklige) Planschulter gefertigt werden kann.

Nach einer weiteren Ausgestaltung der Erfindung ist der Schneideinsatz durch eine rhombische oder trigonförmige Grundform gekennzeichnet, wobei die Schneidkanten zu den stumpfen Ecken unter einem negativen Neigungswinkel ansteigen. Durch diese Maßnahme, die eine entsprechende Höhenverringerung im Bereich der Schneidkante zwischen einer spitzen und einer stumpfen Schneidecke voraussetzt, vergrößert sich das planschulterseitig abspanbare Aufmaß. Nach einer bevorzugten Ausführungsform beträgt der genannte negative Neigungswinkel 15° bis 45°.

Die von der Spanfläche zur gegenüberliegenden Spanfläche oder der Basisfläche gemessene Höhe weist im Bereich der Schneidecke ein Maß und im Bereich der ersten Einsenkung und/oder der zweiten Einsenkung ein geringeres Maß auf, das vorzugsweise zwischen einem Zehntel und der Hälfte des erstgenannten Maßes im Bereich der Schneidecke liegt. Vorzugsweise ist die geringste Höhe im Bereich der zweiten Einsenkung kleiner oder maximal so groß wie die Höhe des Schneideinsatzes im Bereich der ersten Einsenkung.

Bei nur einer Einsenkung pro Schneidkante schließt sich nach einer weiteren Ausgestaltung der Erfindung eine unter einem positiven Neigungswinkel fallende Schneidkante zum Auswärtskopieren an. Dieser Neigungswinkel liegt nach einer besonderen Ausführungsform der Erfindung zwischen 30° und 75°, vorzugsweise zwischen 40° und 65°.

Bei nur einer Einsenkung pro Schneidkante ist die am schneidenferneren Ende der Ausnehmung gegebene Höhe des Schneideinsatzes ≥ der Höhe des Schneideinsatzes im Bereich zwischen der stumpfen Schneidecke und dem genannten Ende, wobei die letztgenannte Höhe ≥1 mm ist und/oder zwischen einem Zehntel und der Hälfte des Maßes der Höhe des Schneideinsatzes liegt, den dieser im Bereich der spitzen Schneidecken hat.

Ausführungsbeispiele der Erfindung sind in den Zeichnungen dargestellt. Es zeigen
- Fig. 1: eine Draufsicht auf eine rhombische Wendeschneidplatte nach der vorliegenden Erfindung,
- Fig. 2, 3: jeweils Detailansichten der Schneidenausbuchtung in unterschiedlichen Ausführungsformen,
- Fig. 4: eine rhombische Wendeschneidplatte mit mehreren Schneideneinsenkungen,
- Fig. 5: eine dreieckige Wendeschneidplatte nach der vorliegenden Erfindung in einer ersten Ausführungsform und
- Fig. 6: eine dreieckige Wendeschneidplatte in einer alternativen Ausführungsform,
- Fig. 7: eine Draufsicht auf eine rhombische Wendeschneidplatte mit einer Langlochbohrung,
- Fig. 8: eine dreieckige Wendeschneidplatte mit einer kleeblattförmigen Bohrung,
- Fig. 9: einen rhombischen Schneideinsatz nach Fig. 1 in unterschiedlichen Zerspanungsbearbeitungen an einem Werkstück,

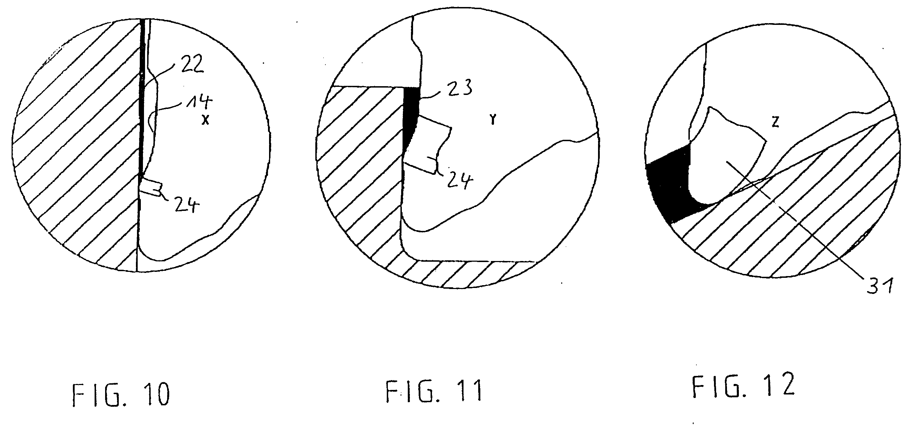

- Fig. 10 bis 12: jeweils Detailansichten der Zerspanungsbearbeitung x, y und z nach Fig. 9,
- Fig. 13 und 14: Seitenansichten unterschiedlicher Ausführungsformen eines rhombischen Schneideinsatzes entsprechend der Blickrichtung B nach Fig. 4,
- Fig. 15: eine Draufsicht auf einen rhombischen Schneideinsatz gemäß Fig. 4, eingespannt in einen Halter an der Planschulter eines Werkstückes und
- Fig. 16: eine Seitenansicht eines Schneideinsatzes nach Fig. 4 entsprechend Blickrichtung A in Fig. 1.

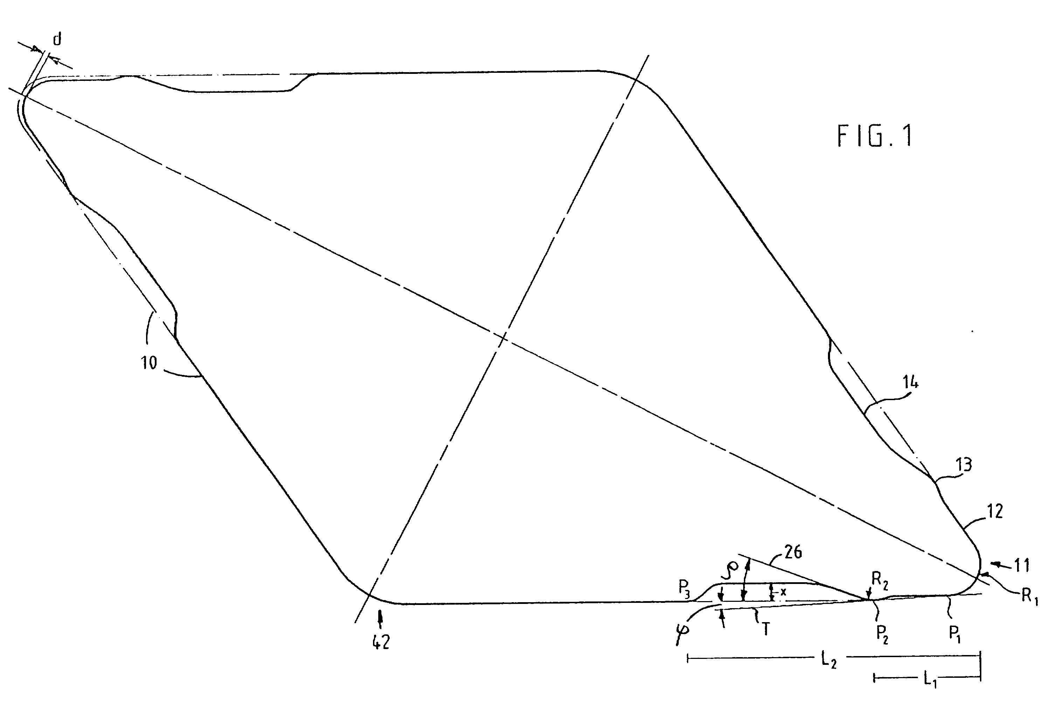

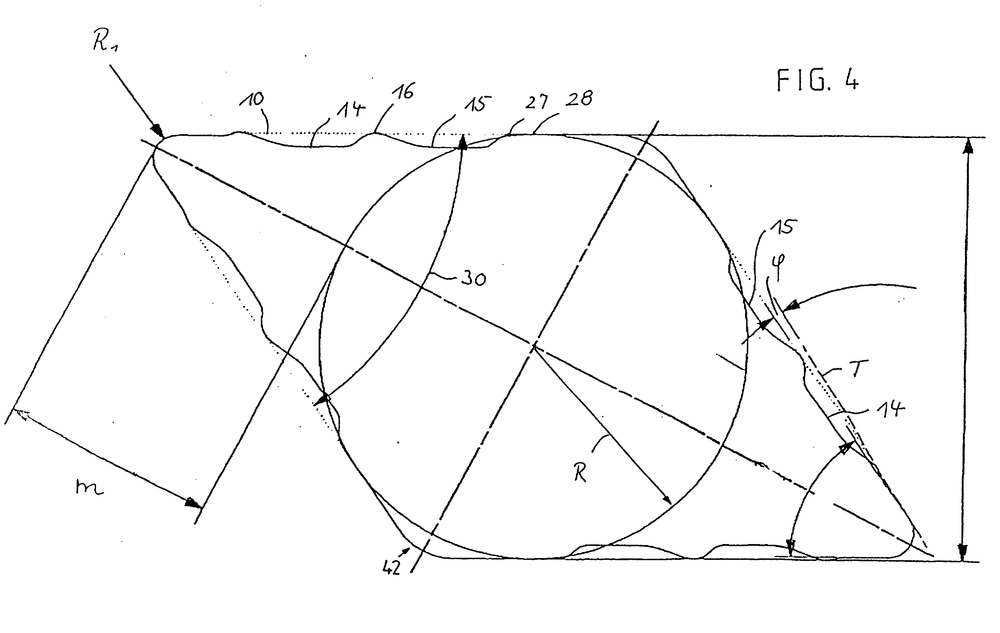

Der in Fig. 1 dargestellte Schneideinsatz besitzt eine im wesentlichen rhombische Form, die nur im Bereich der spitzen Schneidecken und der im folgenden beschriebenen Schneideneinbuchtungen verlassen wird. Die Grundformeinhüllende ist mit 10 bezeichnet. Der Schneideinsatz besitzt jeweils gegenüberliegende spitze Schneidecken 11, die gegenüber der einhüllenden Grundform um ein Maß d zurückgesetzt sind. An die Schneidecke 11 mit dem Radius R₁ schließt sich ein aus geradlinigen und/oder konkav geformten Teilen bestehender Schneidenteil 12 an, der zwischen den Punkten P₁ und P₂ liegt. Dieser Schneidenabschnitt definiert zusammen mit dem Radius R₁ die maximale Schnittiefe L₁ zum Ein- oder Auswärtskopieren und Längsdrehen. An den Schneidenteil 12 schließt sich eine Schneidenausstülpung 13 mit einem Radius R₂ an, der etwa gleich dem genannten Radius R₁ ist. Im weiteren Schneidkantenverlauf folgt eine Schneideneinsenkung 14 mit einer Tiefe x gegenüber der einhüllenden Grundform 10. Diese Schneideneinsenkung 14 besteht aus konkaven und/oder geraden Schneidenteilen und endet im Punkt P₃. Eine gemeinsame an die Schneidenausstülpung 13 und den Schneidenteil 12 angelenkte Tangente T ist um einen Winkel ϕ von vorzugsweise weniger als 10° geneigt, insbesondere 1° oder 3°. Der im Anschluß an die Schneidenausstülpung 13 gelegene Teil der Schneideneinsenkung verläuft unter einem Winkel ρ, der zwischen 15° und 25° liegt. Dieser Teil der Schneideneinsenkung 14 dient beim Auswärtskopieren von Planschultern als wirksame Schneide. Die diesbezügliche Schnittiefe kann bei Schultern bis zu einer Höhe von L₂ -L₁ maximal etwa die Schneideneinsenkungstiefe x betragen. Der Schneideinsatz besitzt einen Innenkreisradius R (siehe Fig. 4), der der DIN-Norm 4987 bzw. ISO-Norm 1832 im Rahmen des Toleranzmaßes M entspricht. Die spitze Schneidecke hat ein Maß m, das die genormte Toleranz M um einen Betrag von maximal 1,5 mm, vorzugsweise 0,3 mm, unterschreitet.

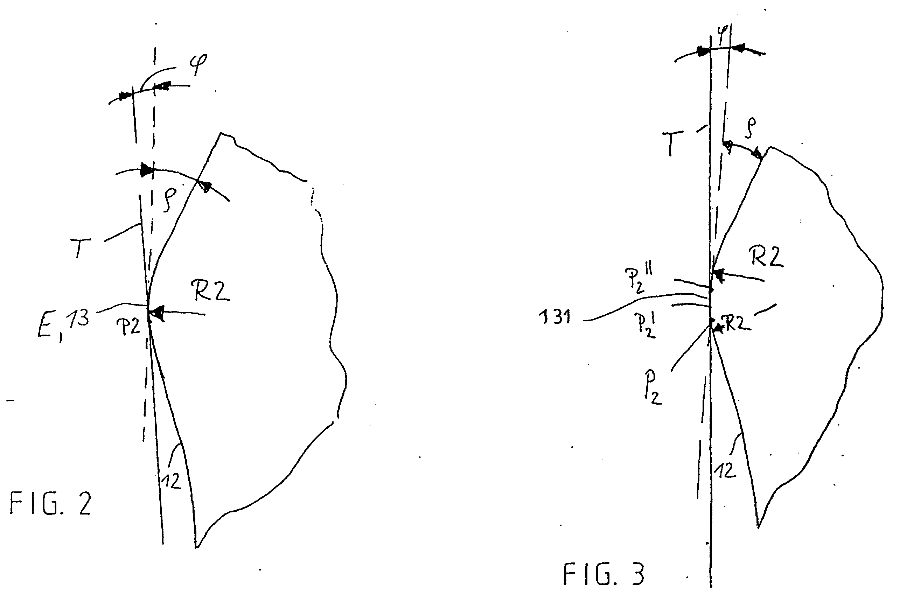

Wie Fig. 2 und 3 zu entnehmen, kann die Schneidenausstülpung 13 einen konstanten Radius R₂ aufweisen (Fig. 2) oder einen geradlinigen Schneidenteil 131, dem sich jenseits der Punkte P₂ und P_{2"} konvexe Teile mit dem Radius R₂ anschließen.

Die Ausführungsform nach Fig. 4 unterscheidet sich von derjenigen nach Fig. 1 dadurch, daß mehrere Schneideneinsenkungen - hier eine zusätzliche Schneideneinsenkung 15 - neben der bereits behandelten Schneideneinsenkung 14 vorgesehen sind. Zwischen den Schneideneinsenkungen 14 und 15 liegt ein demgegenüber hervortretender, mit der einhüllenden Grundform 10 mindestens einen gemeinsamen Punkt bildender Schneidenbereich 16. Im dargestellten Fall ist der Bereich 16 teilkreisförmig ausgebildet, er kann jedoch auch geradlinige, auf der Grundformeinhüllenden 10 liegende Teilstrecken aufweisen. Im übrigen ist die Schneideneinsenkung 15 entsprechend der Schneideneinsenkung 14 ausgebildet. Der Eckenwinkel 30 liegt bei etwa 55°.

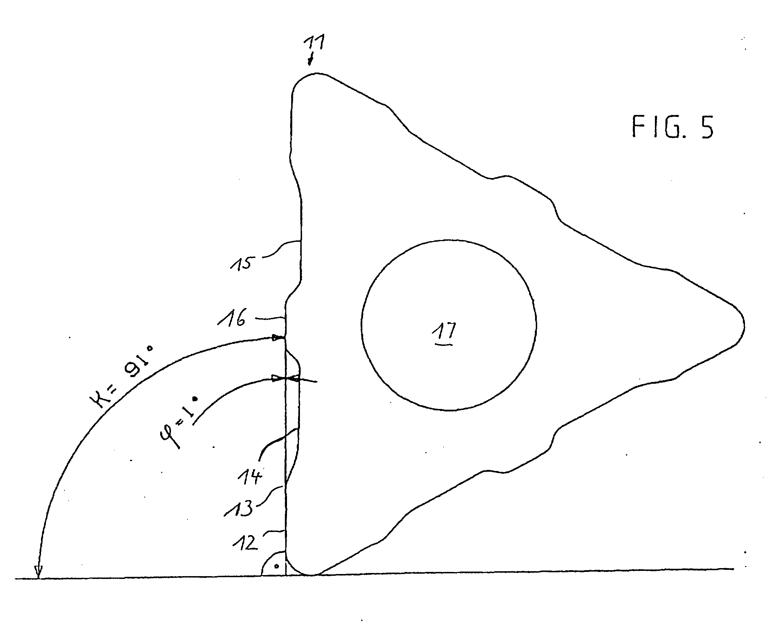

Fig. 5 zeigt einen Schneideinsatz mit einer dreieckigen Grundform, bei dem jede Schneidkante entsprechend Fig. 4 zwei aufeinanderfolgende Schneideneinsenkungen 14 und 15 aufweist, wobei der dazwischenliegende Bereich zum Teil linear mit der Grundformeinhüllenden 10 abschließt. Im vorliegenden Fall beträgt der Winkel ϕ = 1°.

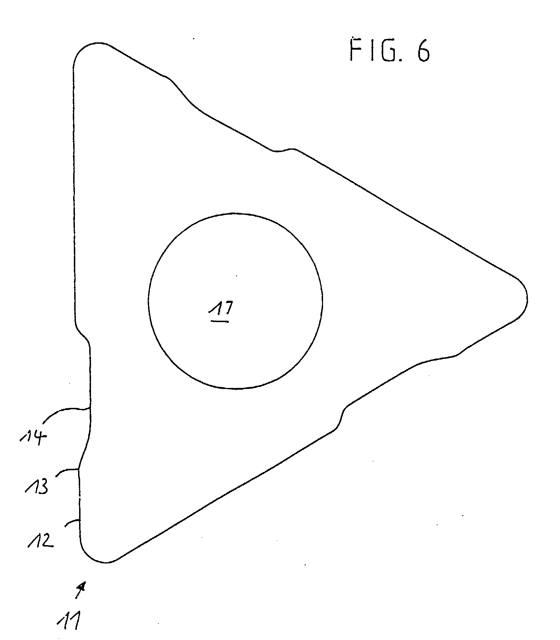

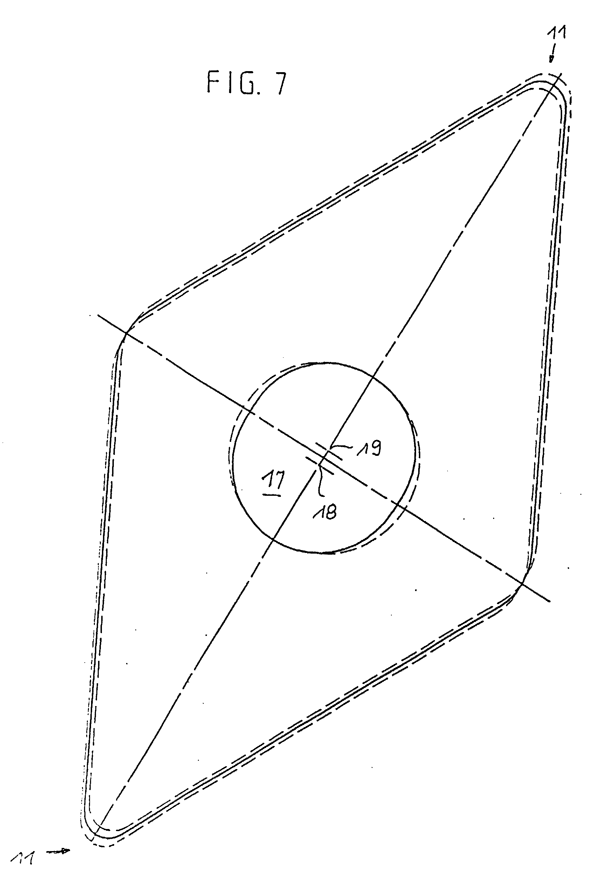

Fig. 6 zeigt eine dreieckige Schneideinsatzausgestaltung, bei der nur jeweils eine der Hauptschneiden in dem an die spitze Schneidecke angrenzenden Teil eine Schneidenausstülpung und eine Schneideneinsenkung 13, 14 besitzt. Zumindest an der der betreffenden, die Einsenkung aufweisenden Hauptschneide liegenden Schneideckenhälfte ist die Schneidecke gegenüber der Einhüllenden zurückgesetzt. Fig. 7 zeigt eine rhombische Schneideinsatzplatte, bei der gegenüber der durchgezogenen Linie jeweils die Variationsbreite des Rhombusgrundformkörpers dargestellt ist. Im Zentrum besitzt die rhombische Schneidplatte eine Bohrung 17, die eine Langloch-Form hat, wobei die beiden Mittelpunkte 18, 19 die jeweils verschobenen Kreismittelpunkte der Halbkreise darstellen, die den spitzen Schneidecken 11 zugewandt sind. Anstelle des Langloches kann auch eine kreisförmige Bohrung entsprechend der gestrichelt dargestellten Größe gewählt werden.

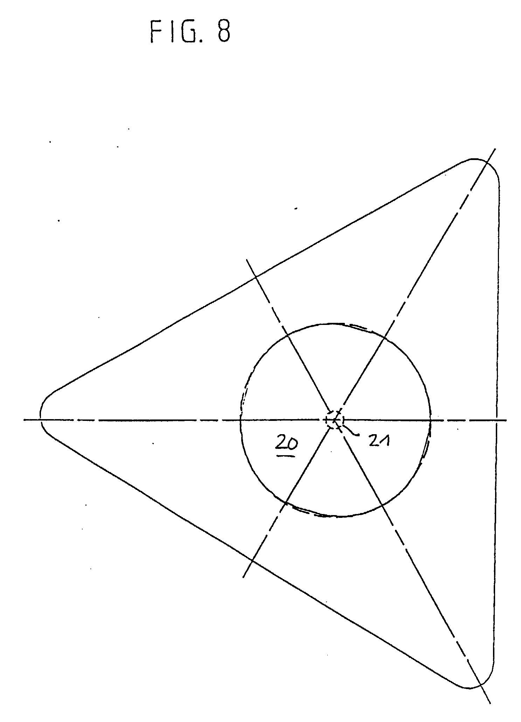

In Fig. 8 ist die Lochbohrung 20 kleeblattförmig, wobei der Innenkreis 21 mit den jeweiligen Schneideckenhalbierenden die verschobenen Kreismittelpunkte bestimmt, um die die jeweilige Bohrung zur spitzen Schneidecke verschoben werden muß. Auch hier kann anstelle der kleeblattförmigen Bohrung mit abgerundeten Ecken eine vergrößerte Bohrung (dargestellt in gestrichelter Form) verwendet werden.

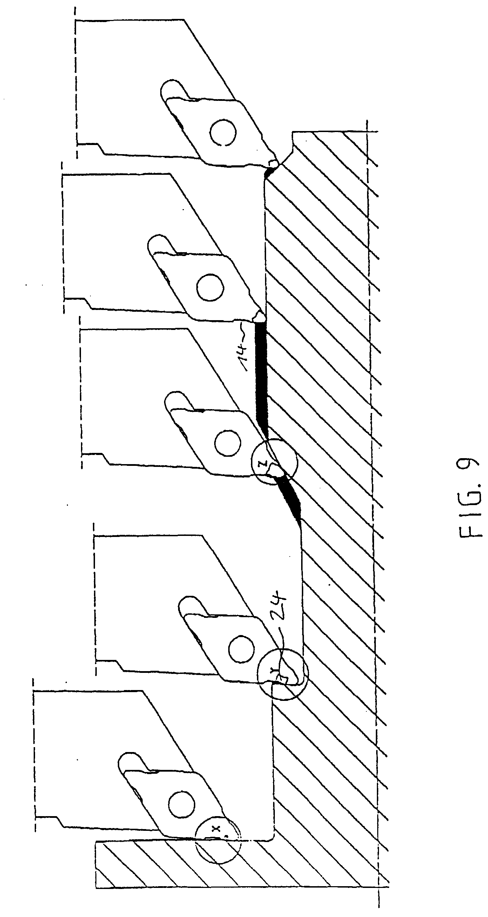

Den rhombischen Schneideinsatz nach Fig. 1 zeigt Fig. 9 im Einsatz, wobei mit x und y jeweils Auswärtskopier-Schneidoperationen von Planschultern dargestellt sind. Je nach Schnittiefe an der Einsenkung 14, dargestellt durch die jeweils abzutragenden Bereiche 22 und 23 entstehen Späne 24 unterschiedlicher Breite. Die rechte Bildhälfte einschließlich der Operation z, die in Fig. 12 vergrößert dargestellt ist, zeigt Auswärtskopieren, Längsdrehen und Einwärtskopieren mittels der an die spitze Schneidecke 11 anschließenden Hauptschneide 12. Bei diesen Operationen ist die Einsenkung 14 nicht wirksam.

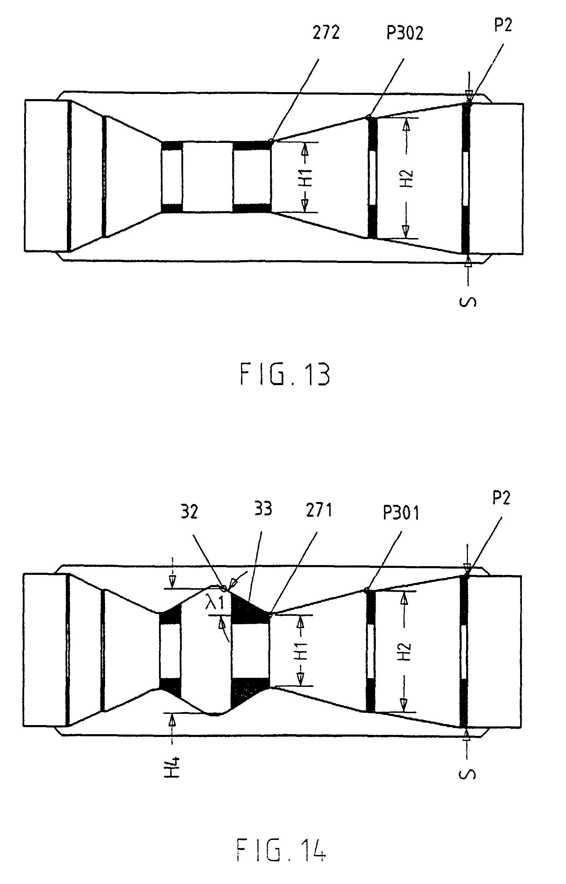

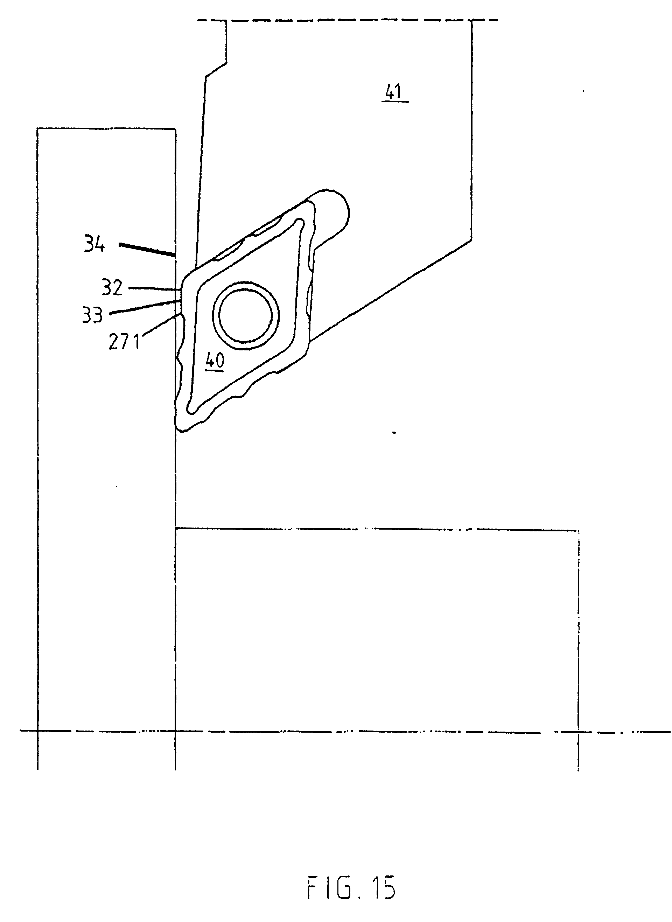

Entsprechend der Blickrichtung B in Fig. 4 zeigen Fig. 13 und 14 Seitenansichten einer mit mehreren Einsenkungen versehenen rhombischen Wendeschneidplatte 40, die entsprechend Fig. 4 in einen Halter 41 eingespannt und doppelseitig verwendbar ist, d.h., sie ist symmetrisch zu einer Querschnittslängsebene ausgebildet. Die Schneidkante fällt etwa von Punkt P₂ aus zur stumpfen Schneidecke 42 stufenweise ab und besitzt eine maximale Höhe, die durch das Maß S bestimmt ist. Im Bereich der ersten Einsenkung 14 minimiert sich das Abstandsmaß kontinuierlich bis auf einen Abstand H2, wonach im Bereich 16 bis zum Punkt P302 dieses Höhenmaß konstant bleibt. Im Anschluß an den Punkt P302 verringert sich das Höhenmaß auf einen Wert H1, so daß die Schneidkante am Punkt 272 im Eckenbereich konstant bleibt. In entsprechender Weise vergrößern sich die genannten Abstandsmaße zur links dargestellten Schneidecke bzw. den Schneidecken 11. Die möglichen effektiven seitlichen Anlageflächen der Wendeschneidplatte zum Halter 41 sind in Fig. 13 schwarz unterlegt.

Entsprechendes gilt im Hinblick auf Fig. 14, wo an die Stelle der Punkte P302 und 272 die Punkte P301 und 271 treten. Im Unterschied zu der Ausbildung nach Fig. 13 ist bei der Ausführungsform nach Fig. 14 jedoch im Bereich 33 die Schneidkante ansteigend ausgebildet, wobei der betreffende Neigungswinkel λ₁ zwischen 15° und 45° liegt und so bemessen ist, daß der Bereich 33 in seiner Einbaulage der Wendeschneidplatte im Halter 41 etwa in einer zur Planschulter 34 des Werkstückes parallelen Ebene liegt, wie dies in Fig. 15 schematisch dargestellt ist. Wie aus den geschwärzten Flächen im Bereich der stumpfen Schneidecke 42 nach Fig. 14 hervorgeht, wird durch diese Maßnahme die wirksame Anlagefläche deutlich vergrößert.

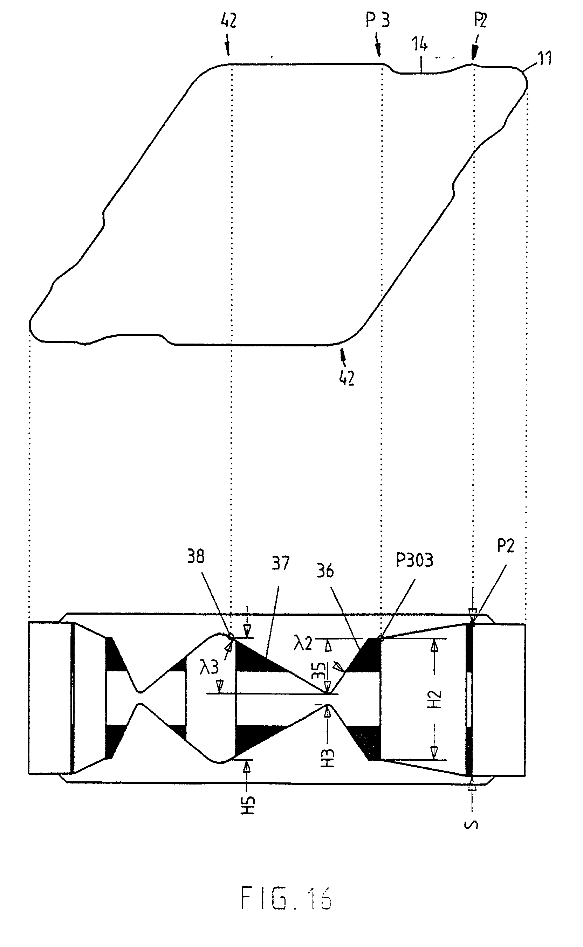

Fig. 16 zeigt entsprechend der Blickrichtung A in Fig. 1 eine Seitenansicht einer rhombischen Wendeschneidplatte mit nur einer Einsenkung. Das maximale Abstandsmaß S bleibt bei dieser Ausführungsform von der Schneidecke 11 ausgehend zunächst bis zur einzigen Einsenkung 14 entsprechend etwa dem Punkt P₂ konstant, in deren Bereich dieses Maß auf die Höhe H2 absinkt. An dem Punkt P303, der etwa am Ende der Einsenkung 14 liegt, schließt sich ein unter einem stark positiven Neigungswinkel λ₂ bis zum Punkt 35 anschließender Bereich 36 der Schneidkante an, der zum Auswärtsplanen benutzt werden kann. Im Bereich des Punktes 35 besitzt der Schneideinsatz eine minimale Höhe H3. Zu schneidkantenferneren Bereichen, nämlich im Bereich 37 der Schneidkante bis hin zum Punkt 38 steigt die Schneidkante in Richtung zum stumpfen Ende unter einem negativen Neigungswinkel λ₃ an. Dieser Winkel liegt zwischen 15° und 45°. Da die Freifläche in dem betreffenden Bereich auf der Grundformeinhüllenden liegt, ergeben sich im Vergleich zu der Ausführungsform nach Fig. 14 zwischen den Punkten P303 und 38 vergrößerte, geschwärzt dargestellte seitliche Anlageflächen. Ein Vorteil der Ausführung nach Fig. 16 besteht darin, daß sich beim Auswärtsplandrehen an der Schneide 36 bzw. dem betreffenden Schneidkantenbereich eine andere Spanablaufrichtung und Spanform ergibt, als an der Schneide im Bereich der Einsenkung 14, wodurch gegenseitige Störungen der Spanabfuhr vermieden und eine hohe Prozeßsicherheit gewährleistet werden. Fig. 14 bis 16 stellen durch Punkte P301 bis P303 somit die unterschiedlichen Höhenlagen des Punktes P₃ dar.

## Patentansprüche

1. Schneideinsatz mit einer im wesentlichen rhombischen, dreieckigen oder trigonförmigen Grundform nach DIN 4987/ISO 1832 oder einer im mathematischen Sinn dieser Grundform ähnlichen Form, mit mindestens einer spitzen Schneidecke (11), die einen Schneideckenwinkel <90°, vorzugsweise ≤60°, aufweist dadurch gekennzeichnet, daß die spitze Schneidecke gegenüber der Grundformeinhüllenden (10) zurückgesetzt ist und am schneideckenabgewandten Ende in eine Schneidenausstülpung (13) übergeht, deren äußerster Punkt (Maximum E) auf der durch die Grundform vorgegebenen Einhüllenden (10) liegt und woran sich im weiteren Schneidenverlauf auf der schneideckenabgewandten Seite mindestens eine Schneideneinsenkung (14, 15) anschließt, wobei die gemeinsame Tangente (T) an die Schneidenausstülpung (13) und einen Punkt (P₁) der zurückgesetzten Schneidecke (11) oder des zurückgesetzten Teiles (12) der Hauptschneide mit der Grundformeinhüllenden (10) einen spitzen Winkel ϕ = K -90° ≤20° bildet, wobei K der Einstellwinkel beim Drehen ist, der ≥90° ist.

2. Schneideinsatz nach Anspruch 1, dadurch gekennzeichnet, daß der Abstand der Tangentenberührungspunkte (P₁, P₂) die maximale Hauptschneidenlänge (L₁) zum Ein- oder Auswärtskopieren und Längsdrehen festlegt, die vorzugsweise größer als der Schneideckenradius (R₁) ist, wobei die Hauptschneidenlänge (L₁) zum Ein- oder Auswärtskopieren und Längsdrehen vorzugsweise eine Länge zwischen 0,6 mm bis 6 mm aufweist oder etwa 1,5 bis 8mal, vorzugsweise 2,5 bis 5mal, so groß wie der Schneideckenradius (R₁) ist.

3. Schneideinsatz nach einem der Ansprüche 1 oder 2, dadurch gekennzeichnet, daß die Schneide im Bereich der Schneidenausstülpung (13) einen Schneidenradius (R₂) besitzt, der vorzugsweise etwa dem Schneideckenradius (R₁) gleich ist.

4. Schneideinsatz nach einem der Ansprüche 1 bis 3, dadurch gekennzeichnet, daß der Schneidenabschnitt (12) zwischen der spitzen Schneidecke (11) und der Schneidenausstülpung zumindest teilweise konkav geformt ist, vorzugsweise aus konkaven und geradlinigen Abschnitten besteht und/oder daß der Schneidenabschnitt (12) zwischen der spitzen Schneidecke (11) und der Schneidenausstülpung (13) stetig ausgebildet ist.

5. Schneideinsatz nach einem der Ansprüche 1 bis 4, dadurch gekennzeichnet, daß der sich an die Schneideckenausstülpung (13) anschließende Teil der Schneideneinsenkung (14) unter einem Winkel (ρ) oder einem an die konkave Schneide angelegten Tangentialwinkel (ρ) zwischen der Grundformeinhüllenden (10) und der Tangente (26) an die Schneide zwischen 5° bis 35°, vorzugsweise 15° bis 25°, verläuft und/oder daß die Tiefe (x) der Schneideneinsenkung (14, 15) zwischen 0,2 mm bis 6 mm, vorzugsweise 0,3 mm bis 1,5 mm, liegt und/oder die Tiefe (x) der Schneideneinsenkung (14, 15) kleiner ist als der überstand der Schneidkörperunterkante gegenüber der Auflageflächenkante des Halters.

6. Schneideinsatz nach einem der Ansprüche 1 bis 5, dadurch gekennzeichnet, daß die Länge (L₂) der Schneideneinbuchtung (L₂ -L₁) zwischen 2 mm bis 10 mm, vorzugsweise 3 mm bis 6 mm, liegt.

7. Schneideinsatz nach einem der Ansprüche 1 bis 6, dadurch gekennzeichnet, daß die Schneide am Endpunkt (P₃) der Schneideneinsenkung (14, 15) gegenüber der Schneidenausbuchtung (13) abgesenkt ist, vorzugsweise um 0,3 mm bis 2 mm, weiterhin vorzugsweise um 0,4 mm bis 1 mm.

8. Schneideinsatz nach einem der Ansprüche 1 bis 7, dadurch gekennzeichnet, daß die Grundformeinhüllende (10) im Innenkreisradius (R) um einen Betrag von maximal 3 mm, vorzugsweise maximal 0,5 mm, vom genormten Innenkreisradius (R) nach DIN 4987/ISO 1832 abweicht, daß weiterhin vorzugsweise die Grundformeinhüllende (10) im Innenkreisradius (R) größer als das durch die Toleranz (M) bestimmte Maß ist und/oder daß das Maß (m) der spitzen Schneidecke(n) (11) innerhalb des Toleranzmaßes (M) nach DIN 4987/ISO 1832 liegt und/oder eine mittlere Schneideinsatzbohrung (17) oder Klemmbohrung, die entsprechend der Innenkreisradiusvergrößerung gegenüber dem genormten Innenkreisradius (R) vergrößert ist.

9. Schneideinsatz nach einem der Ansprüche 1 bis 8, dadurch gekennzeichnet durch nur eine Einsenkung (14), an die sich eine unter einem positiven Neigungswinkel (λ₂) fallende Schneidkante (36) zum Auswärtskopierdrehen anschließt, wobei der Neigungswinkel (λ₂) zwischen 30° und 75° liegt, vorzugsweise zwischen 40° und 65° und/oder daß die am schneideckenferneren Ende der Ausnehmung (14) gegebene Höhe (H2) des Schneideinsatzes ≥ der Höhe (H3) des Schneideinsatzes im Bereich zwischen der stumpfen Schneidecke (42) und dem genannten Ende ist, wobei diese Höhe (H3) ≥1 mm ist und/oder zwischen 0,1 S und 0,5 S liegt und/oder daß die Höhe (H₄, H₅) des Schneideinsatzes an der stumpfen Ecke (32, 38) das 0,8 bis 1,2fache der Höhe (H₂) im Bereich der Einsenkung (14) beträgt.

10. Verwendung des Schneideinsatzes nach einem der Ansprüche 1 bis 9 zum Einspannen in einen Schneideinsatzhalter unter Einstellwinkeln ≥90°, vorzugsweise von 95°, 93°, 91°, 100° oder 107,5°.

## Claims

1. Cutting insert with an essentially rhombic, triangular or trigonal basic shape according to DIN 4987/ISO 1832 or a shape similar in a mathematical sense with at least one acute-angle cutting corner (11) having a cutting-corner angle < 90°, preferably ≤ 60°,
**characterised in that**
the acute-angle cutting corner is set back in relation to the basic shape envelope (10) and merges at the end turned away from the cutting corner into a cutting edge protuberance (13) whose outermost point (maximum E) is on the envelope of the basic shape and after which in the further direction of the cutting edge on the side turned away from the cutting corner there is at least one cutting edge recess (14, 15), whereby the common tangent (T) to the cutting edge protuberance (13) and a point (P₁) of the recessed cutting corner (11) or of the recessed part (12) of the main cutting edge forms with the basic shape envelope (10) an acute angle ϕ = κ - 90° ≤ 20°, K being the set angle during turning operations which is ≥ 90°.

2. Cutting insert according to claim 1, characterised in that the spacing between the tangential contact points (P₁) and (P₂) determines the maximum main cutting edge length (L₁) for inward and outward copying and cylindrical turning which is preferably greater than the cutting-corner radius (R₁), whereby the main cutting length (L₁) for inward or outward copying and cylindrical turning has a length between 0,6 mm and 6 mm or is about 1,5 to 8 times, preferably 2,5 to 5 times, as large as the cutting-corner radius (R₁).

3. Cutting insert according to one of claims 1 or 2, characterised in that the cutting edge has in the region of the cutting edge protuberance (13) a cutting edge radius (R₂) which is preferably about equal to the cutting-corner radius (R₁).

4. Cutting insert according to one of claims 1 to 3, characterised in that the cutting edge portion (12) between the acute-angle cutting corner (11) and the cutting edge protuberance is at least partially concave, preferably consisting of concave and straight-line portions and/or that the cutting edge portion (12) between the acute-angle cutting corner (11) and the cutting edge protuberance (13) is made uniform.

5. Cutting insert according to one of claims 1 to 4, characterised in that the part of the cutting edge recess (14) adjacent the cutting edge protuberance (13) extends at an angle (ρ) or at a tangential angle (ρ) to the concave cutting edge between the basic shape envelope (10) and the tangents (26) to the cutting edge between 5° and 35°, preferably 15° to 25° and/or that the depth (x) of the cutting edge recess (14, 15) lies between 0,2 mm and 6 mm, preferably 0,3 mm and 1,5 mm and/or the depth (x) of the cutting edge recess (14, 15) is smaller than the projection of the cutting-body lower edge relative to the engagement surface edge of the holder.

6. Cutting insert according to one of claims 1 to 5, characterised in that the length (L₂) of the cutting recesses (L₂ - L₁) is between 2 mm and 10 mm, preferably 3 mm to 6 mm.

7. Cutting insert according to one of claims 1 to 6, characterised in that the cutting edge is sloped at the end (P₃) of the cutting edge recess (14, 15) relative to the cutting edge protuberance (13), preferably by 0,3 mm to 2 mm, further preferably by 0,4 mm to 1 mm.

8. Cutting insert according to one or claims 1 to 7, characterised in that the base-shape envelope (10) varies in the inner-circle radius (R) by an amount of at most 3 mm, preferably at most 0,5 mm, from the standard inner-circle radius (R) according to DIN 4987 or ISO 1832, that further preferably the basic-shape envelope (10) in the inner-circle radius (R) is larger than the dimension determined by the tolerance (M) and/or that the dimension (m) of the acute-angle cutting-corner(s) (11) lies within the tolerance dimension (M) according to DIN 4987 or ISO 1832 and/or a central cutting-insert bore (17) or clamp bore which is of greater size with respect to the inner-circle radius expansion than the standard inner-circle radius (R).

9. Cutting insert according to one of the claims 1 to 8, characterised by only one recess (14) adjacent which for outward copy turning is a cutting edge (36) dropping a positive angle (λ₂), whereby the angle (λ₂) lies between 30° and 75°, preferably between 40° and 65° and/or that the height (H2) of the cutting insert is at the end remote from the recess (14) ≥ the height (H3) of the cutting insert in the region between the obtuse-angle cutting corner (42) and the mentioned end, this height (H3) being ≥ 1 mm and/or lying between 0,1 S and 0,5 S and/or that the height (H₄, H₅) of the cutting insert at the obtuse-angle corner (32, 38) is equal to 0,8 to 1,2 times the height (H₂) in the region of the recess (14).

10. Use of the cutting insert according to one of claims 1 to 9 by clamping in a cutting-insert holder at set angles ≥ 90°, preferably 95°, 93°, 91°, 100°, or 107,5°.

## Revendications

1. Insert de coupe ayant une forme de base pour l'essentiel rhomboïdale, triangulaire ou trigone selon DIN 4987/ISO 1832 ou une forme qui, au sens mathématique, est semblable à cette forme de base, avec du moins un coin de coupe (11) aigu qui présente un angle de coin de coupe < 90°, de préférence ≤ 60°,
**caractérisé par le fait que**
le coin de coupe aigu est reculé par rapport à l'enveloppe (10) de la forme de base et, à l'extrémité montrant dans la direction opposée au coin de coupe, entre dans une protubérance (13) du tranchant, dont le point le plus extérieur (maximum E) se trouve sur l'enveloppe (10) prédéterminée par la forme de base et qui, continuant l'allure du tranchant du côté montrant dans la direction opposée au coin de coupe, est suivie d'au moins un enfoncement (14, 15) du tranchant, la tangente commune (T) à la protubérance (13) du tranchant et à un point (P₁) du coin de coupe reculé (11) ou de la partie reculée (12) du tranchant principal formant avec l'enveloppe (10) de la forme de base un angle aigu ϕ = κ -90° ≤ 20°, où κ est l'angle d'attaque lors du tournage, qui est ≥ 90°.

2. Insert de coupe selon la revendication 1, caractérisé par le fait que l'écart entre les points de contact (P₁, P₂) de la tangente détermine la longueur maximale (L₁) du tranchant principal pour le copiage en dedans ou en dehors et le tournage longitudinal, qui, de préférence, est plus grande que le rayon (R₁) du coin de coupe, la longueur (L₁) du tranchant principal pour le copiage en dedans ou en dehors et le tournage longitudinal présentant, de préférence, une longueur qui est comprise entre 0,6 mm et 6 mm ou étant à peu près égal à 1,5 à 8 fois, de préférence 2,5 à 5 fois le rayon (R₁) du coin de coupe.

3. Insert de coupe selon l'une des revendications 1 ou 2, caractérisé par le fait que le tranchant présente dans la zone de la protubérance de tranchant (13) un rayon de tranchant (R₂) qui, de préférence, est à peu près égal au rayon (R₁) du coin de coupe.

4. Insert de coupe selon l'une des revendications 1 à 3, caractérisé par le fait que la section (12) du tranchant entre le coin de coupe aigu (11) et la protubérance du tranchant est au moins partiellement concave, de préférence se compose de sections concaves et rectilignes, et/ou que la section (12) du tranchant entre le coin de coupe aigu (11) et la protubérance (13) du tranchant est réalisée de manière continue.

5. Insert de coupe selon l'une des revendications 1 à 4, caractérisé par le fait que la partie de l'enfoncement (14) du tranchant, qui est contiguë à la protubérance (13) du tranchant s'étend à un angle (ρ) ou à un angle tangentiel (ρ) appliqué au tranchant concave entre l'enveloppe (10) de la forme de base et la tangente (26) au tranchant, qui est compris entre 5° et 35°, de préférence entre 15° et 25°, et/ou que la profondeur (x) de l'enfoncement (14, 15) du tranchant est comprise entre 0,2 mm et 6 mm, de préférence entre 0,3 mm et 1,5 mm, et/ou que la profondeur (x) de l'enfoncement (14, 15) du tranchant est plus petite que la saillie de l'arête inférieure du corps de coupe par rapport à l'arête de la surface d'appui du support.

6. Insert de coupe selon l'une des revendications 1 à 5, caractérisé par le fait que la longueur (L₂) de l'enfoncement (L₂ - L₁) du tranchant est comprise entre 2 mm et 10 mm, de préférence entre 3 mm et 6 mm.

7. Insert de coupe selon l'une des revendications 1 à 6, caractérisé par le fait que, au point terminal (P₃) de l'enfoncement (14, 15) du tranchant, le tranchant est abaissé par rapport à la protubérance (13) du tranchant, de préférence de 0,3 mm à 2 mm, en outre de préférence de 0,4 mm à 1 mm.

8. Insert de coupe selon l'une des revendications 1 à 7, caractérisé par le fait que l'enveloppe (10) de la forme de base s'écarte dans le rayon (R) du cercle intérieur d'une valeur de 3 mm au maximum, de préférence de 0,5 mm au maximum, du rayon normalisé (R) du cercle intérieur selon DIN 4987/ISO 1832, que, en outre de préférence, l'enveloppe (10) de la forme de base dans le rayon (R) du cercle intérieur est plus grande que la mesure déterminée par la tolérance (M), et/ou que la mesure (m) du ou bien des coin(s) de coupe aigu(s) (11) se trouve à l'intérieur de la mesure de tolérance (M) selon DIN 4987/ISO 1832, et/ou caractérisé par un perçage central (17) de l'insert de coupe ou perçage de serrage qui est agrandi selon l'agrandissement du rayon du cercle intérieur par rapport au rayon normalisé (R) du cercle intérieur.

9. Insert de coupe selon l'une des revendications 1 à 8, caractérisé par un seul enfoncement (14) qui est suivi d'un tranchant (36) descendant à un angle positif d'inclinaison (λ₂), pour le copiage en dehors, l'angle d'inclinaison (λ₂) étant compris entre 30° et 75°, de préférence entre 40° et 65°, et/ou que la hauteur (H2) de l'insert de coupe, donnée au bout de l'enfoncement (14), qui est situé plus loin du coin de coupe, est ≥ à la hauteur (H3) de l'insert de coupe dans la zone entre le coin de coupe obtus (42) et le bout mentionné, cette hauteur (H3) étant ≥ 1mm et/ou étant comprise entre 0,1 S et 0,5 S, et/ou que la hauteur (H₄, H₅) de l'insert de coupe au coin obtus (32, 38) est égale à 0,8 à 1,2 fois la hauteur (H₂) dans la zone de l'enfoncement (14).

10. Utilisation de l'insert de coupe selon l'une des revendications 1 à 9 pour le serrage dans un porte-insert de coupe à des angles d'attaque ≥ 90°, de préférence de 95°, 93°, 91°, 100° ou de 107,5°.
